# EUROPÄISCHE PATENTANMELDUNG

(11) **EP 1 560 102 A2**
(43) Veröffentlichungstag der Anmeldung: **03.08.2005**
(21) Anmeldenummer: 04027956.4
(22) Anmeldetag: 25.11.2004
(51) Int. Cl.: G06F 3/033

(54) **Berührungsempfindlicher Bildschirm mit haptischer Rückkopplung die mittels Federn gesteuert wird**

(30) Priorität: 02.02.2004 US 541411 P
(71) Anmelder: Volkswagen Aktiengesellschaft, 38436 Wolfsburg (DE)
(72) Erfinder: Prados, Michael, 94030 Millbrae (US)

(57) **Zusammenfassung**

Die Erfindung betrifft eine Eingabevorrichtung, insbesondere für ein Kraftfahrzeug, mit einem Touchscreen zur Eingabe von Befehlen durch Berühren einer Bedienfläche oder durch Drücken auf die Bedienfläche, einem Aktor zum Bewegen des Touchscreens in zumindest eine Richtung gegenüber einem Referenzkörper und einer im wesentlichen U-förmigen Feder zum mechanischen Verbinden des Touchscreens mit dem Referenzkörper.

## Beschreibung

Die Erfindung betrifft eine Eingabevorrichtung, insbesondere für ein Kraftfahrzeug, mit einem Touchscreen gemäß dem Oberbegriff des Patentanspruches 1.

Ein Touchscreen ist z.B. aus der DE 201 02 197 U1 (incorporated by reference) bekannt. In der DE 201 02 197 U1 ist ein Touchscreen zur Visualisierung von elektronischen Signalen und einer bestätigenden Berührungseingabe von Zeichen und Symbolen bestehend aus einer Funktionsebene zur Visualisierung und Tasteingabe und einer hierzu korrespondierenden, höher gelegenen, punktuell deformierbaren Schutzebene offenbart. Dabei wird bei einer Auswahl bestimmter Punkte der Funktionsebene mittels Berührung über die Schutzebene hinweg mindestens ein Bestätigungssignal für den Tastsinn (haptischer Reiz) des Benutzers wahrnehmbar an der Position des Berührungspunktes in der deformierten Schutzebene erzeugt und das Bestätigungssignal für den Tastsinn (haptischer Reiz) durch exzentrisch, inner- und/oder unterhalb der Funktionsebene angeordnete Schwingungselemente erzeugt. Zudem erfolgt bei dem aus der DE 201 02 197 U1 bekannten Touchscreen die Weiterleitung der erzeugten Schwingungen von der Funktions- auf die Schutzebene durch direkten Kontakt der beiden Ebenen und/oder über die Randbereiche der Ebenen durch starre oder elastische Verbindungselemente.

Einzelheiten zu Touchscreens können z.B. der Internetseite www.3m.com/3mtouchsystems/ entnommen werden. Es werden z.B. folgende Touchscreens von 3M™ angeboten:
- MicroTouch™ 12.1" FPD Touch Monitor
   (vgl. www.3m.com/3mtouchsystems/Products/Monitors/FPDdesktop.jhtml)
- MicroTouch™ M150 FPD Touch Monitor
   (vgl. www.3m.com/3mtouchsystems/Products/Monitors/M150.jhtml)
- MicroTouch™ CRT Touch Monitors
   (vgl. www.3m.com/3mtouchsystems/Products/Monitors/CRTdesktop.jhtml)
- MicroTouch™ ChassisTouch™ FPD Touch Monitors
   (vgl. www.3m.com/3mtouchsystems/Products/Monitors/FPDchassis.jhtml)
- MicroTouch™ ChassisTouch™ CRT Touch Monitor
   (vgl. www.3m.com/3mtouchsystems/Products/Monitors/CRTchassis.jhtml)

Weitere Einzelheiten zu Touchscreens können auch den folgenden Internetseiten entnommen werden:
- www.elotouch.com/products/default.asp
- www.3m.com/3mtouchsystems/Products/Resistive/5-wire.jhtml
- www.3m.com/3mtouchsystems/Products/Resistive/PL.jhtml
- www.3m.com/3mtouchsystems/Products/Resistive/FG.jhtml
- www.3m.com/3mtouchsystems/Products/Resistive/SRTS.jhtml

Aus der DE 201 80 024 U1 bzw. der korrespondierenden WO 01/54109 A1 (incorporated by reference) ist zur haptischen Rückkopplung zudem eine Berührungssteuerung mit haptischer Rückkopplung zur Eingabe von Signalen in einen Computer und zur Ausgabe von Kräften an einen Benutzer der Berührungssteuerung bekannt, wobei die Berührungssteuerung ein Berührungseingabegerät aufweist, das eine annähernd ebene Berührungsoberfläche aufweist, die derart betrieben wird, dass sie aufgrund einer Position auf der Berührungsoberfläche, die ein Benutzer berührt, ein Positionssignal in einen Prozessor des Computers eingibt, wobei das Positionssignal die Position in zwei Dimensionen wiedergibt. Die Berührungssteuerung gemäß der WO 01/54109 A1 weist zudem mindestens einen mit dem Berührungseingabegerät verbundenen Aktor auf, wobei der Aktor eine Kraft auf das Berührungseingabegerät ausgibt, um dem die Berührungsoberfläche berührenden Benutzer eine haptische Empfindung zu liefern, wobei der Aktor die Kraft aufgrund einer von dem Prozessor ausgegebenen Kraftinformation direkt auf das Berührungseingabegerät ausgibt.

Haptische Rückkopplung ist zudem aus der US 6 429 846, der WO 03/038800 A1 (incorporated by reference) und der WO 03/41046 A1 (incorporated by reference) bekannt.

Aus der DE 197 31 285 A1 ist ein Bedienelement für eine Einrichtung mit mehreren wählbaren Menüs, Funktionen und/oder Funktionswerten bekannt, das eine Oberfläche besitzt, die durch den Bediener erfassbar ist und über die die Auswahl durch eine lokale Bewegung bzw. Berührung der Oberfläche vernehmbar ist. Die Oberfläche ist in ihrer Gestalt entsprechend dem/der gewählten und/oder auswählbaren Menü, Funktion und/oder Funktionswert veränderbar.

Es ist Aufgabe der Erfindung, eine Eingabevorrichtung mit einem Touchscreen zu verbessern. Es ist wünschenswert, eine besonders gut für Kraftfahrzeuge geeignete Eingabevorrichtung zu schaffen. Eine solche Eingabevorrichtung zeichnet sich insbesondere durch eine lange Lebensdauer bei verhältnismäßig geringen Kosten aus.

Die Aufgabe wird erfindungsgemäß durch eine Eingebevorrichtung mit den Merkmalen des Anspruches 1 gelöst.

Weitere Ausgestaltungen der Erfindung ergeben sich aus den Unteransprüchen.

Vorgenannte Aufgabe wird durch eine Eingabevorrichtung, insbesondere für ein Kraftfahrzeug, mit einem Touchscreen zur Eingabe von Befehlen durch Berühren einer Bedienfläche oder durch Drücken auf die Bedienfläche, einem Aktor zum Bewegen des Touchscreens in zumindest eine Richtung gegenüber einem Referenzkörper und einer im wesentlichen U-förmigen Feder zum mechanischen Verbinden des Touchscreens mit dem Referenzkörper gelöst.

Ein solcher Referenzkörper kann ein Teil eines Kraftfahrzeuges, wie z.B. ein Lenkrad oder eine Konsole, sein. Es kann vorgesehen sein, dass der Touchscreen auch zur optischen Darstellung von Informationen ausgebildet ist. In einer alternativen Ausgestaltung ist jedoch unterhalb des (transparenten) Touchscreens ein Display zur optischen Darstellung von Informationen angeordnet, wobei der Touchscreen gegenüber dem Display, insbesondere in einer zur Bedienfläche im wesentlichen parallelen Richtung, bewegbar ist. In diesem Falle ist das Display Referenzkörper im Sinne der Erfindung oder zumindest Teil des Referenzkörpers im Sinne der Erfindung.

In einer Ausgestaltung der Erfindung umfasst die Eingabevorrichtung, zumindest drei, insbesondere vier, im wesentlichen U-förmige Federn zum mechanischen Verbinden des Touchscreens mit dem Referenzkörper.

In einer weiteren Ausgestaltung der Erfindung weist die im wesentlichen U-förmige Feder eine, insbesondere 5mm bis 30mm breite, Öffnung auf, die im wesentlichen auf den Touchscreen gerichtet ist. Zudem weist die im wesentlichen U-förmige Feder in einer Ausgestaltung der Erfindung einen der Öffnung im wesentlichen gegenüberliegenden Scheitelpunkt auf, wobei die im wesentlichen U-förmige Feder derart ausgerichtet ist, dass eine imaginäre durch den Scheitelpunkt und durch die Öffnung verlaufende Linie im wesentlichen parallel zur Bedienfläche verläuft.

In einer Ausgestaltung der Erfindung ist der Aktor derart ausgestaltet, dass der Touchscreen mittels des Aktors im wesentlichen, insbesondere aufgrund einer rotatorischen Bewegung des Aktors, parallel zur Bedienfläche bewegbar ist.

In einer weiteren Ausgestaltung der Erfindung weist die im wesentlichen U-förmige Feder eine Dicke von 0,5mm bis 2mm auf. Die Feder besteht in einer weiteren Ausgestaltung der Erfindung im wesentlichen aus Kunststoff. Ein solcher Kunststoff kann insbesondere Polycarbonat (engl.: polycarbonate), ABS, Acetal (engl.: acetal) oder Polyethylen (engl.: polyethylene) umfassen. Besonders geeignete im wesentlichen U-förmige Federn sind aus Acetal herstellbar.

In einer weiteren Ausgestaltung der Erfindung weist die im wesentlichen U-förmige Feder eine Federkonstante (engl.: stiffness) auf, die derart auf eine Masse des Touchscreens abgestimmt ist, dass der Touchscreen in Verbindung mit der im wesentlichen U-förmigen Feder (bzw. allen Federn) eine mechanische Eigenfrequenz von 5Hz bis 150Hz, insbesondere eine Eigenfrequenz von 30Hz bis 75Hz, aufweist

In einer weiteren Ausgestaltung der Erfindung weist die im wesentlichen U-förmige Feder zwei Federarme, eine zwischen den beiden Federarmen angeordnete Öffnung und einen Verbindungspunkt auf, an dem die beiden Federarme verbunden sind, wobei die im wesentlichen U-förmige Feder parallel zur Öffnung eine Hauptfederkonstante und eine Nebenfederkonstante in einer durch den Verbindungspunkt und durch die Öffnung verlaufenden Richtung aufweist, und wobei die Nebenfederkonstante zumindest das Zweifache der Hauptfederkonstante, insbesondere das zumindest Dreifache, beträgt. In einer weiteren Ausgestaltung der Erfindung weist die im wesentlichen U-förmige Feder zwei Federarme, eine zwischen den beiden Federarmen angeordnete Öffnung und einen Verbindungspunkt auf, an dem die beiden Federarme verbunden sind, wobei die im wesentlichen U-förmige Feder parallel zur Öffnung eine Hauptfederkonstante aufweist, wobei die im wesentlichen U-förmige Feder senkrecht zur Öffnung eine Nebenfederkonstante aufweist, und wobei die Nebenfederkonstante zumindest das Zweifache der Hauptfederkonstante beträgt. Gut geeignet sind Federn, bei denen die Nebenfederkonstante zumindest das Vierfache der Hauptfederkonstante beträgt.

In einer weiteren Ausgestaltung der Erfindung weist die im wesentlichen U-förmige Feder zwei Federarme, eine zwischen den beiden Federarmen angeordnete Öffnung und einen Verbindungspunkt auf, an dem die beiden Federarme verbunden sind, wobei die im wesentlichen U-förmige Feder parallel zur Öffnung und Bedienfläche eine Hauptfederkonstante aufweist, wobei die im wesentlichen U-förmige Feder senkrecht zur Öffnung jedoch parallel zur Bedienfläche eine Nebenfederkonstante aufweist, und wobei die Nebenfederkonstante zumindest das Zweifache, insbesondere das Dreifache, der Hauptfederkonstante beträgt. Gut geeignet sind Federn, bei denen die Nebenfederkonstante zumindest das Vierfache der Hauptfederkonstante beträgt.

In einer weiteren Ausgestaltung der Erfindung umfasst die Eingabevorrichtung zumindest zwei im wesentlichen U-förmige Federn und zumindest ein mechanisches Verbindungselement zum Verbinden der zumindest zwei im wesentlichen U-förmigen Federn, wobei das mechanische Verbindungselement und die zumindest zwei im wesentlichen U-förmigen Federn zusammen aus einem Stück hergestellt bzw. insbesondere gegossen sind. In einer weiteren Ausgestaltung der Erfindung umfasst die Eingabevorrichtung zumindest drei im wesentlichen U-förmige Federn und zumindest einen Rahmen zum Verbinden der zumindest drei im wesentlichen U-förmigen Federn und zur Aufnahme des Touchscreens, wobei der Rahmen und die zumindest drei im wesentlichen U-förmigen Federn zusammen aus einem Stück hergestellt bzw. insbesondere gegossen sind. In einer weiteren Ausgestaltung der Erfindung umfasst die Eingabevorrichtung zumindest vier im wesentlichen U-förmige Federn und zumindest einen Rahmen zum Verbinden der zumindest vier im wesentlichen U-förmigen Federn und zur Aufnahme des Touchscreens, wobei der Rahmen und die zumindest vier im wesentlichen U-förmigen Federn zusammen aus einem Stück hergestellt bzw. insbesondere gegossen sind.

In einer weiteren Ausgestaltung der Erfindung wird der Touchscreen durch die im wesentlichen U-förmige Feder gegenüber dem Referenzkörper frei schwebend, insbesondere ohne ein Kugellager und ein kugellagerartiges Element und/oder eine Gleitfläche, gehalten.

In einer weiteren Ausgestaltung der Erfindung umfasst die Eingabevorrichtung eine Steuerung zum Ansteuern des Aktors, wobei der Aktor mittels der Steuerung derart ansteuerbar ist, dass der Touchscreen mittels des Aktors zur Bestätigung eines mittels des Touchscreens eingegebenen Befehls in eine zur Bedienfläche im wesentlichen parallele Richtung, insbesondere für eine Dauer von 50ms und 800ms, insbesondere 100ms und 400ms, bewegbar ist. Die Bewegung kann z.B. periodisch, insbesondere mit einer Eigenfrequenz eines Schwingungssystems aus Feder und Masse des Touchscreens, erfolgen. Dabei kann die periodische Bewegung eine abklingende Schwingung z.B. mit einer Hüllkurve mit einem exponentiellen Anteil sein.

Vorgenannte Aufgabe wird zudem durch eine Eingabevorrichtung, insbesondere für ein Kraftfahrzeug, mit einem Touchscreen zur Eingabe von Befehlen durch Berühren einer Bedienfläche oder durch Drücken auf die Bedienfläche, mit einem Aktor zum Bewegen des Touchscreens in zumindest eine Richtung gegenüber einem Referenzkörper und mit einer Feder zum mechanischen Verbinden des Touchscreens mit dem Referenzkörper gelöst. Die Feder besitzt dabei eine Hauptfederkonstante in einer zur Bedienfläche parallelen Hauptrichtung und eine Nebenfederkonstante in einer ebenfalls zur Bedienfläche parallelen jedoch zur Hauptrichtung senkrechten Nebenrichtung, wobei die Nebenfederkonstante zumindest das Zweifache, insbesondere das Dreifache, der Hauptfederkonstante beträgt. Gut geeignet sind Federn, bei denen die Nebenfederkonstante zumindest das Vierfache der Hauptfederkonstante beträgt.

Ein vorgenannter Referenzkörper kann ein Teil eines Kraftfahrzeuges, wie z.B. ein Lenkrad oder eine Konsole, sein. Es kann vorgesehen sein, dass der Touchscreen auch zur optischen Darstellung von Informationen ausgebildet ist. In einer alternativen Ausgestaltung ist jedoch unterhalb des (transparenten) Touchscreens ein Display zur optischen Darstellung von Informationen angeordnet, wobei der Touchscreen gegenüber dem Display, insbesondere in einer zur Bedienfläche im wesentlichen parallelen Richtung, bewegbar ist. In diesem Falle ist das Display Referenzkörper im Sinne der Erfindung oder zumindest Teil des Referenzkörpers im Sinne der Erfindung.

In einer weiteren Ausgestaltung der Erfindung umfasst die Eingabevorrichtung zumindest drei, insbesondere vier, Federn zum mechanischen Verbinden des Touchscreens mit dem Referenzkörper.

In einer weiteren Ausgestaltung der Erfindung ist der Aktor derart ausgestaltet, dass der Touchscreen mittels des Aktors im wesentlichen, insbesondere aufgrund einer rotatorischen Bewegung des Aktors, parallel zur Bedienfläche bewegbar ist.

In einer weiteren Ausgestaltung der Erfindung weist die Feder eine Dicke von 0,5mm bis 2mm auf. Die Feder besteht in einer weiteren Ausgestaltung der Erfindung im wesentlichen aus Kunststoff. Ein solcher Kunststoff kann insbesondere Polycarbonat (engl.: polycarbonate), ABS, Acetal (engl.: acetal) oder Polyethylen (engl.: polyethylene) umfassen. Besonders geeignete Federn sind aus Acetal herstellbar.

In einer weiteren Ausgestaltung der Erfindung weist die Feder eine Federkonstante (engl.: stiffness) auf, die derart auf eine Masse des Touchscreens abgestimmt ist, dass der Touchscreen in Verbindung mit der Feder (bzw. allen Federn) eine mechanische Eigenfrequenz von 5Hz bis 150Hz, insbesondere eine Eigenfrequenz von 30Hz bis 75Hz, aufweist

In einer weiteren Ausgestaltung der Erfindung umfasst die Eingabevorrichtung zumindest zwei Federn und zumindest ein mechanisches Verbindungselement zum Verbinden der zumindest zwei Federn, wobei das mechanische Verbindungselement und die zumindest zwei Federn zusammen aus einem Stück hergestellt bzw. insbesondere gegossen sind. In einer weiteren Ausgestaltung der Erfindung umfasst die Eingabevorrichtung zumindest drei Federn und zumindest einen Rahmen zum Verbinden der zumindest drei Federn und zur Aufnahme des Touchscreens, wobei der Rahmen und die zumindest drei Federn zusammen aus einem Stück hergestellt bzw. insbesondere gegossen sind. In einer weiteren Ausgestaltung der Erfindung umfasst die Eingabevorrichtung zumindest vier Federn und zumindest einen Rahmen zum Verbinden der zumindest vier Federn und zur Aufnahme des Touchscreens, wobei der Rahmen und die zumindest vier Federn zusammen aus einem Stück hergestellt bzw. insbesondere gegossen sind.

In einer weiteren Ausgestaltung der Erfindung wird der Touchscreen durch die Feder gegenüber dem Referenzkörper frei schwebend, insbesondere ohne ein Kugellager und ein kugellagerartiges Element und/oder eine Gleitfläche, gehalten.

In einer weiteren Ausgestaltung der Erfindung umfasst die Eingabevorrichtung eine Steuerung zum Ansteuern des Aktors, wobei der Aktor mittels der Steuerung derart ansteuerbar ist, dass der Touchscreen mittels des Aktors zur Bestätigung eines mittels des Touchscreens eingegebenen Befehls in eine zur Bedienfläche im wesentlichen parallele Richtung, insbesondere für eine Dauer von 50ms und 800ms, insbesondere 100ms und 400ms, bewegbar ist. Die Bewegung kann z.B. periodisch, insbesondere mit einer Eigenfrequenz eines Schwingungssystems aus Feder und Masse des Touchscreens, erfolgen. Dabei kann die periodische Bewegung eine abklingende Schwingung z.B. mit einer Hüllkurve mit einem exponentiellen Anteil sein.

Vorgenannte Aufgabe wird zudem durch eine Eingabevorrichtung, insbesondere für ein Kraftfahrzeug, mit einem Touchscreen zur Eingabe von Befehlen durch Berühren einer Bedienfläche oder durch Drücken auf die Bedienfläche, mit einem Aktor zum Bewegen des Touchscreens in zumindest eine Richtung gegenüber einem Referenzkörper mit zumindest zwei, insbesondere zumindest drei, Federn zum mechanischen Verbinden des Touchscreens mit dem Referenzkörper und mit einem Rahmen zum Verbinden der zumindest zwei Federn und zur Aufnahme des Touchscreens gelöst, wobei der Rahmen und die zumindest zwei Federn zusammen aus einem Stück hergestellt bzw. insbesondere gegossen sind. In einer Ausgestaltung der Erfindung umfasst die Eingabevorrichtung vier Federn.

Ein vorgenannter Referenzkörper kann ein Teil eines Kraftfahrzeuges wie z.B. ein Lenkrad oder eine Konsole sein. Es kann vorgesehen sein, dass der Touchscreen auch zur optischen Darstellung von Informationen ausgebildet ist. In einer alternativen Ausgestaltung ist jedoch unterhalb des (transparenten) Touchscreens ein Display zur optischen Darstellung von Informationen angeordnet, wobei der Touchscreen gegenüber dem Display, insbesondere in einer zur Bedienfläche im wesentlichen parallelen Richtung, bewegbar ist. In diesem Falle ist das Display Referenzkörper im Sinne der Erfindung oder zumindest Teil des Referenzkörpers im Sinne der Erfindung.

In einer Ausgestaltung der Erfindung ist der Aktor derart ausgestaltet, dass der Touchscreen mittels des Aktors im wesentlichen, insbesondere aufgrund einer rotatorischen Bewegung des Aktors, parallel zur Bedienfläche bewegbar ist.

Die Federn bestehen in einer weiteren Ausgestaltung der Erfindung im wesentlichen aus Kunststoff. Ein solcher Kunststoff kann insbesondere Polycarbonat (engl.: polycarbonate), ABS, Acetal (engl.: acetal) oder Polyethylen (engl.: polyethylene) umfassen. Besonders geeignete U-förmige Federn sind aus Acetal herstellbar.

In einer weiteren Ausgestaltung der Erfindung weisen die Federn je eine Federkonstante (engl.: stiffness) auf, die derart auf eine Masse des Touchscreens abgestimmt ist, dass der Touchscreen in Verbindung mit den Federn eine mechanische Eigenfrequenz von 5Hz bis 150Hz, insbesondere eine Eigenfrequenz von 30Hz bis 75Hz, aufweist

In einer weiteren Ausgestaltung der Erfindung wird der Touchscreen durch die Federn gegenüber dem Referenzkörper frei schwebend, insbesondere ohne ein Kugellager und ein kugellagerartiges Element und/oder eine Gleitfläche, gehalten.

In einer weiteren Ausgestaltung der Erfindung umfasst die Eingabevorrichtung eine Steuerung zum Ansteuern des Aktors, wobei der Aktor mittels der Steuerung derart ansteuerbar ist, dass der Touchscreen mittels des Aktors zur Bestätigung eines mittels des Touchscreens eingegebenen Befehls in eine zur Bedienfläche im wesentlichen parallele Richtung, insbesondere für eine Dauer von 50ms und 800ms, insbesondere 100ms und 400ms, bewegbar ist. Die Bewegung kann z.B. periodisch, insbesondere mit einer Eigenfrequenz eines Schwingungssystems aus Feder und Masse des Touchscreens, erfolgen. Dabei kann die periodische Bewegung eine abklingende Schwingung z.B. mit einer Hüllkurve mit einem exponentiellen Anteil sein.

Vorgenannte Aufgabe wird zudem durch eine Eingabevorrichtung, insbesondere für ein Kraftfahrzeug, mit einem Touchscreen zur Eingabe von Befehlen durch Berühren einer Bedienfläche oder durch Drücken auf die Bedienfläche, mit einem Aktor zum Bewegen des Touchscreens in zumindest eine Richtung gegenüber einem Referenzkörper und mit einer im wesentlichen aus Kunststoff bestehenden Feder zum mechanischen Verbinden des Touchscreens mit dem Referenzkörper gelöst. Ein solcher Kunststoff kann insbesondere Polycarbonat (engl.: polycarbonate), ABS, Acetal (engl.: acetal) oder Polyethylen (engl.: polyethylene) umfassen. Besonders geeignete Federn sind aus Acetal herstellbar.

Ein vorgenannter Referenzkörper kann ein Teil eines Kraftfahrzeuges wie z.B. ein Lenkrad oder eine Konsole sein. Es kann vorgesehen sein, dass der Touchscreen auch zur optischen Darstellung von Informationen ausgebildet ist. In einer alternativen Ausgestaltung ist jedoch unterhalb des (transparenten) Touchscreens ein Display zur optischen Darstellung von Informationen angeordnet, wobei der Touchscreen gegenüber dem Display, insbesondere in einer zur Bedienfläche im wesentlichen parallelen Richtung, bewegbar ist. In diesem Falle ist das Display Referenzkörper im Sinne der Erfindung oder zumindest Teil des Referenzkörpers im Sinne der Erfindung.

In einer weiteren Ausgestaltung der Erfindung umfasst die Eingabevorrichtung zumindest drei, insbesondere vier, im wesentlichen aus Kunststoff bestehende Federn zum mechanischen Verbinden des Touchscreens mit dem Referenzkörper.

In einer weiteren Ausgestaltung der Erfindung wird der Touchscreen durch die Feder gegenüber dem Referenzkörper frei schwebend, insbesondere ohne ein Kugellager und ein kugellagerartiges Element und/oder eine Gleitfläche, gehalten.

In einer weiteren Ausgestaltung der Erfindung umfasst die Eingabevorrichtung eine Steuerung zum Ansteuern des Aktors, wobei der Aktor mittels der Steuerung derart ansteuerbar ist, dass der Touchscreen mittels des Aktors zur Bestätigung eines mittels des Touchscreens eingegebenen Befehls in eine zur Bedienfläche im wesentlichen parallele Richtung, insbesondere für eine Dauer von 50ms und 800ms, insbesondere 100ms und 400ms, bewegbar ist. Die Bewegung kann z.B. periodisch, insbesondere mit einer Eigenfrequenz eines Schwingungssystems aus Feder und Masse des Touchscreens, erfolgen. Dabei kann die periodische Bewegung eine abklingende Schwingung z.B. mit einer Hüllkurve mit einem exponentiellen Anteil sein.

Vorgenannte Aufgabe wird zudem durch eine Eingabevorrichtung, insbesondere für ein Kraftfahrzeug, mit einem Touchscreen zur Eingabe von Befehlen durch Berühren einer Bedienfläche oder durch Drücken auf die Bedienfläche, mit einem Aktor zum Bewegen des Touchscreens in zumindest eine Richtung gegenüber einem Referenzkörper und mit zumindest einer Feder zum mechanischen Verbinden des Touchscreens mit dem Referenzkörper gelöst, wobei der Touchscreen durch die Feder gegenüber dem Referenzkörper frei schwebend, insbesondere ohne ein Kugellager und ein kugellagerartiges Element und/oder eine Gleitfläche, gehalten wird.

Ein solcher Referenzkörper kann ein Teil eines Kraftfahrzeuges wie z.B. ein Lenkrad oder eine Konsole sein. Es kann vorgesehen sein, dass der Touchscreen auch zur optischen Darstellung von Informationen ausgebildet ist. In einer alternativen Ausgestaltung ist jedoch unterhalb des (transparenten) Touchscreens ein Display zur optischen Darstellung von Informationen angeordnet, wobei der Touchscreen gegenüber dem Display, insbesondere in einer zur Bedienfläche im wesentlichen parallelen Richtung, bewegbar ist. In diesem Falle ist das Display Referenzkörper im Sinne der Erfindung oder zumindest Teil des Referenzkörpers im Sinne der Erfindung.

In einer weiteren Ausgestaltung der Erfindung umfasst die Eingabevorrichtung eine Steuerung zum Ansteuern des Aktors, wobei der Aktor mittels der Steuerung derart ansteuerbar ist, dass der Touchscreen mittels des Aktors zur Bestätigung eines mittels des Touchscreens eingegebenen Befehls in eine zur Bedienfläche im wesentlichen parallele Richtung, insbesondere für eine Dauer von 50ms und 800ms, insbesondere 100ms und 400ms, bewegbar ist. Die Bewegung kann z.B. periodisch, insbesondere mit einer Eigenfrequenz eines Schwingungssystems aus Feder und Masse des Touchscreens, erfolgen. Dabei kann die periodische Bewegung eine abklingende Schwingung z.B. mit einer Hüllkurve mit einem exponentiellen Anteil sein.

Vorgenannte Aufgabe wird zudem durch eine Anzeigevorrichtung, insbesondere für ein Kraftfahrzeug, mit einem transparenten Touchscreen zur Eingabe von Befehlen durch Berühren einer Bedienfläche oder durch Drücken auf die Bedienfläche, einem unterhalb des Touchscreens angeordneten Display zur optischen Darstellung von Informationen, einem Aktor zum Bewegen des Touchscreens gegenüber dem Display in zumindest eine zur Bedienfläche im wesentlichen parallele Richtung und einer Steuerung zum Ansteuern des Aktors gelöst, wobei der Aktor mittels der Steuerung derart ansteuerbar ist, dass der Touchscreen mittels des Aktors zur Bestätigung eines mittels des Touchscreens eingegebenen Befehls in Bezug auf das Display, insbesondere in eine zur Bedienfläche im wesentlichen parallele Richtung, bewegbar ist.

In einer Ausgestaltung der Erfindung ist der Aktor mittels der Steuerung derart ansteuerbar ist, dass der Touchscreen mittels des Aktors zur Bestätigung eines mittels des Touchscreens eingegebenen Befehls in eine zur Bedienfläche im wesentlichen parallele Richtung, insbesondere für eine Dauer von 50ms und 800ms, insbesondere 100ms und 400ms, bewegbar ist. Die Bewegung kann z.B. periodisch, insbesondere mit einer Eigenfrequenz eines Schwingungssystems aus Feder und Masse des Touchscreens, erfolgen. Dabei kann die periodische Bewegung eine abklingende Schwingung z.B. mit einer Hüllkurve mit einem exponentiellen Anteil sein.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

In den nachfolgenden Zeichnungen und den zugehörigen Beschreibungen wird die Erfindung anhand von Ausführungsbeispielen näher beschrieben.
Es zeigen:
Fig. 1 zeigt ein Ausführungsbeispiel für ein Cockpit eines Kraftfahrzeuges;
Fig. 2 zeigt ein weiteres Ausführungsbeispiel für ein Cockpit eines Kraftfahrzeuges;
Fig. 3 zeigt eine Eingabevorrichtung;
Fig. 4 zeigt einen Querschnitt der Eingabevorrichtung entlang der Schnittlinie A-A gemäß Fig. 3;
Fig. 5 zeigt ein Ausführungsbeispiel einer Feder;
Fig. 6 zeigt ein weiteres Ausführungsbeispiel einer Feder;
Fig. 7 zeigt ein weiteres Ausführungsbeispiel einer Feder;
Fig. 8 zeigt ein weiteres Ausführungsbeispiel einer Feder;
Fig. 9 zeigt ein weiteres Ausführungsbeispiel einer Feder;
Fig. 10 zeigt ein weiteres Ausführungsbeispiel einer Feder;
Fig. 11 zeigt einfaches Steuersignal;
Fig. 12 zeigt eine Bewegung des Touchscreens in eine zum Touchscreen im wesentlichen parallele Richtung;
Fig. 13 zeigt eine Bewegung des Touchscreens in eine zum Touchscreen im wesentlichen parallele Richtung;
Fig. 14 zeigt ein weiteres Steuersignal;
Fig. 15 zeigt ein Ausführungsbeispiel für eine mittels einer Eingabevorrichtung dargestellten Grundmaske;
Fig. 16 zeigt ein Ausführungsbeispiel für eine Maske zur Bedienung einer Klimaanlage;
Fig. 17 zeigt ein Ausführungsbeispiel für eine Maske zur Bedienung eines Navigationssystems;
Fig. 18 zeigt ein Ausführungsbeispiel für eine Untermaske zur Bedienung eines Navigationssystems;
Fig. 19 zeigt ein Ausführungsbeispiel für eine weitere Untermaske zur Bedienung eines Navigationssystems; und
Fig. 20 zeigt ein Ausführungsbeispiel für eine Maske zur Bedienung eines Telefons.

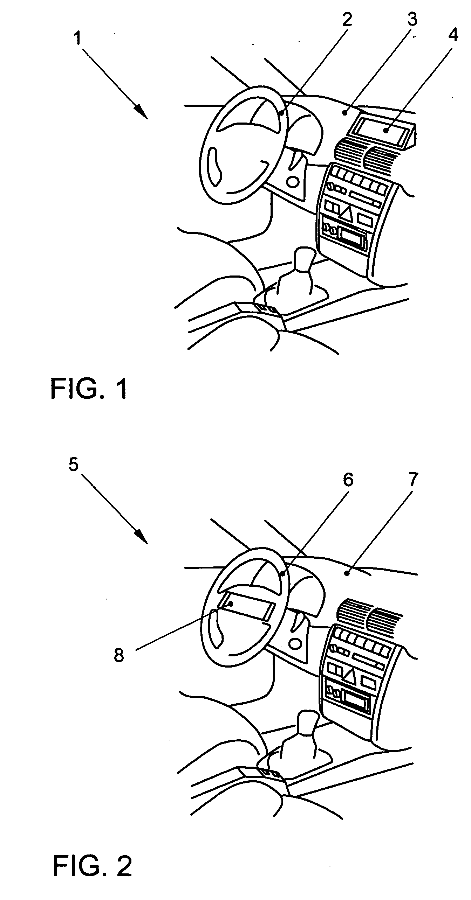

Fig. 1 zeigt ein Ausführungsbeispiel für ein Cockpit 1 eines Kraftfahrzeuges. In dem Cockpit 1 ist unterhalb eines Armaturenbretts 3 ein Lenkrad 2 angeordnet. Das Armaturenbrett 3 weist eine neben dem Lenkrad 2 angeordnete Eingabevorrichtung 4 auf. Fig. 2 zeigt ein alternatives Ausführungsbeispiel für ein Cockpit 5 eines Kraftfahrzeuges, wobei in dem Cockpit 5 ebenfalls unterhalb eines Armaturenbretts 7 ein Lenkrad 6 angeordnet ist. In dem Lenkrad 6 ist jedoch abweichend von dem Ausführungsbeispiel gemäß Fig. 1 eine Eingabevorrichtung 8 angeordnet.

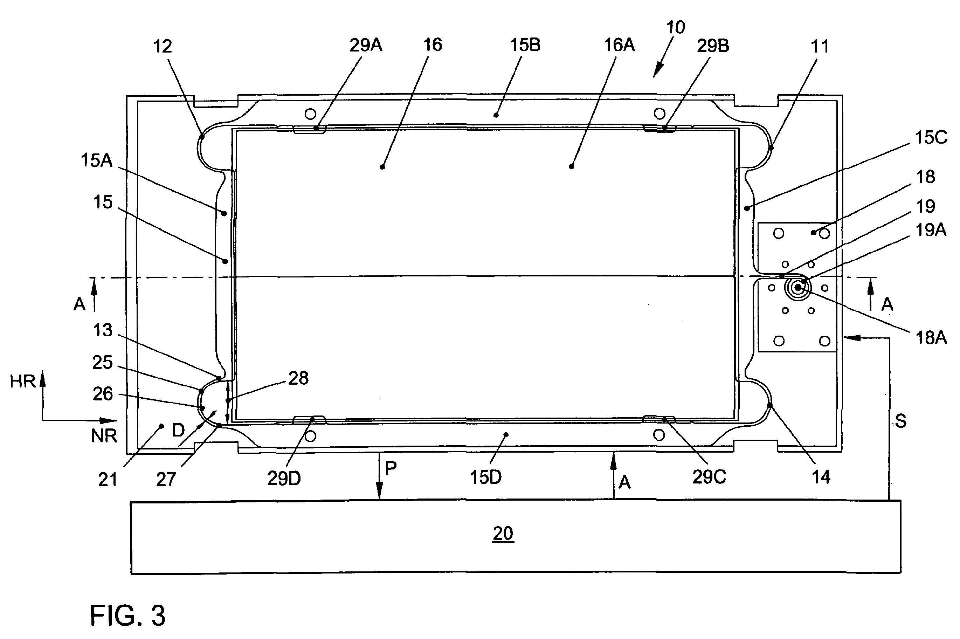

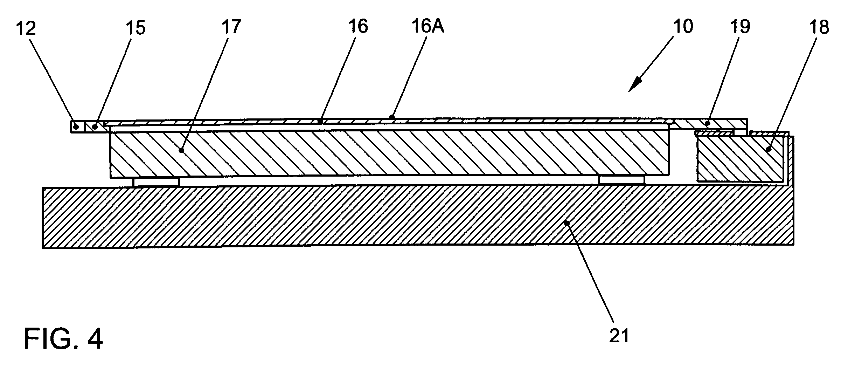

Fig. 3 zeigt - als mögliches Ausführungsbeispiel einer Eingabevorrichtung 4 oder 8 - eine Eingabevorrichtung 10 zur optischen Darstellung von Informationen und zur Eingabe von Befehlen in einer Draufsicht. Fig. 4 zeigt einen Querschnitt der Eingabevorrichtung 10 entlang der Schnittlinie A-A gemäß Fig. 3. Die Eingabevorrichtung 10 weist einen über einem Display 17 angeordneten transparenten Touchscreen 16 mit einer Bedienfläche 16A auf. Das Display 17 ist mittels Halterungen 29A, 29B, 29C und 29D mit einem Referenzkörper 21 verbunden. Der Referenzkörper 21 kann Teil des Armaturenbretts 3 oder des Lenkrades 6 sein.

Der Touchscreen 16 kann einen nicht dargestellten Kraftsensor (oder äquivalenten Sensor) umfassen, mittels dessen ein von einem Bediener ausgeübter Druck auf den Touchscreen 16 ermittelbar ist. Aus diese Weise kann mittels des Touchscreens 16 eine Berührung des Touchscreen 16 durch einen Bediener von einer bewussten Bedienung durch Drücken auf den Touchscreen 16 unterschieden werden. So führt in diesem Falle ein Drücken auf den Touchscreen 16 an einer als Bedienelement angezeigten Stelle zu einer Bedienung des Touchscreens 16 nicht jedoch eine einfache Berührung des Touchscreen 16 durch einen Bediener an einer als Bedienelement angezeigten Stelle. Eine derartige Ausgestaltung ist für den Einsatz in Kraftfahrzeugen vorteilhaft.

Der Touchscreen 16 wird mittels eines Rahmens 15 gehalten. Der Rahmens 15 weist vier U-förmige Federn 11, 12, 13, 14 auf, die mittels Verbindungselementen 15A, 15B, 15C und 15D mit einander verbunden sind. Der Rahmen 15 ist ein Gussteil aus Kunststoff, d.h., die U-förmigen Federn 11, 12, 13, 14 sind zusammen mit den Verbindungselementen 15A, 15B, 15C und 15D aus einem Stück aus Kunststoff gegossen. Ein solcher Kunststoff kann insbesondere Polycarbonat (engl.: polycarbonate), ABS, Acetal (engl.: acetal) oder Polyethylen (engl.: polyethylene) umfassen. Besonders geeignete U-förmige Federn sind aus Acetal herstellbar. Polycarbonat ist besonders geeignet, gute Federn zu einem günstigen Preis herzustellen.

Der Rahmen ist an den Verbindungselementen 15A und 15C mit dem Touchscreen 16 verklebt. In alternativer oder zusätzlicher Ausgestaltung wird der Touchscreen 16 durch eine Vorspannung der U-förmigen Federn 11, 12, 13, 14 in dem Rahmen gehalten.

Der Rahmen 15 weist ein (flexibles) Verbindungsstück 19 auf, dass mit dem Verbindungselement 15C verbunden ist. Das Verbindungsstück 19 weist eine Verkrümmung 19A auf, die einen exzentrischen Antriebswellenzapfen 18A eines als Elektromotors ausgebildeten Aktors 18 umfasst. Die rotatorische Bewegung des Aktors 18 wird in eine translatorische Bewegung umgewandelt. Der Aktor 18 ist als Gleichstrom(bürsten)motor ausgestaltet. Es sind aber auch andere Ausgestaltungen in Verbindung mit einer anderen Verbindung mit dem Rahmen 15, wie z.B. Piezoaktoren oder so genannte Voicecoils einsetzbar.

Die U-förmigen Federn 11, 12, 13, 14 weisen je zwei Federarme 25 und 27, eine zwischen den beiden Federarmen 25 und 27 angeordnete Öffnung 28 und einen Verbindungspunkt 26 auf, an dem die beiden Federarme 25 und 27 verbunden sind. Die U-förmigen Federn 11, 12, 13, 14 weisen im wesentlichen parallel zur Öffnung 28 eine Hauptfederkonstante und im wesentlichen senkrecht zur Öffnung 28 eine Nebenfederkonstante auf, wobei die Nebenfederkonstante zumindest das Vierfache der Hauptfederkonstante beträgt. Im vorliegenden Ausführungsbeispiel bezieht sich die Hauptfederkonstante auf eine in Fig. 3 als Hauptrichtung HR bezeichnete Richtung und Nebenfederkonstante auf eine in Fig. 3 als Nebenrichtung NR bezeichnete Richtung. Die Hauptrichtung HR und die Nebenrichtung NR sind orthogonal zueinander aber parallel zur Bedienfläche 16A.

Die U-förmigen Federn 11, 12, 13, 14 weisen eine Dicke D von 0,5mm bis 2mm, im vorliegenden Ausführungsbeispiel von 0,8mm, auf. Die Weite der Öffnung 28 beträgt zwischen 5mm und 30mm. Die konkrete Weite der Öffnung 28 wird materialabhängig derart gewählt, dass eine gewünschte Hauptfederkonstante erzielt wird. Die Hauptfederkonstante wird dabei derart auf eine Masse des Touchscreens 16 abgestimmt, dass der Touchscreen 16 in Verbindung mit den U-förmigen Federn 11, 12, 13, 14 eine mechanische Eigenfrequenz von 5Hz bis 150Hz, insbesondere eine Eigenfrequenz von 30Hz bis 75Hz, aufweist. Im vorliegenden Ausführungsbeispiel ist vorgesehen, dass die Eigenfrequenz 55Hz beträgt. Eigenfrequenz im Sinne der Erfindung ist dabei insbesondere die kleinste mechanische Resonanzfrequenz des Systems aus den U-förmigen Federn 11, 12, 13, 14 und dem Touchscreen 16.

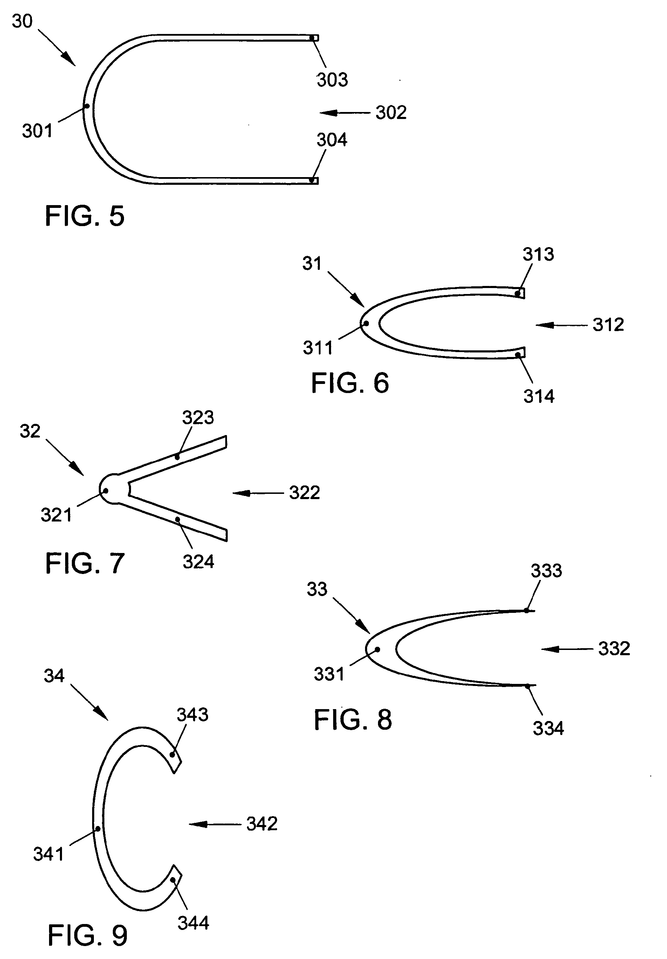

Der Begriff U-förmige Federn in Sinne der Erfindung soll insbesondere weit gefasst verstanden werden. So sollen U-förmige Federn in Sinne der Erfindung insbesondere Federn umfassen, die zwei Federarme aufweisen. U-förmige Federn in Sinne der Erfindung sollen insbesondere halbkreisförmige Federn 11, 12, 13, 14, wie sie in Fig. 3 dargestellt sind, oder U-förmige Federn 30 im strengen Sinne, wie sie in Fig. 5, dargestellt ist, umfassen. U-förmige Federn in Sinne der Erfindung sollen insbesondere in Fig. 5, Fig. 6, Fig. 7, Fig. 8, Fig. 9 und Fig. 10 dargestellte Federn 30, 31, 32, 33, 34 und 35 umfassen. Dabei bezeichnen Bezugszeichen 301, 311, 321, 331, 341 und 351 je einen zwischen je zwei Federarmen 303 und 304, 313 und 314, 323 und 324, 333 und 334, 343 und 344 bzw. 353 und 354 angeordnete Verbindungspunkte. Bezugszeichen 302, 312, 322, 332, 342 und 352 bezeichnen je zwischen den je zwei Federarmen 303 und 304, 313 und 314, 323 und 324, 333 und 334, 343 und 344 bzw. 353 und 354 angeordnete Öffnungen.

Der Touchscreen 16 und das Display 17 gemäß Fig. 3 und Fig. 4 sind datentechnisch mit einer Steuerung 20 verbunden, von der dem Display 17 ein Signal A mit auf dem Display 17 darzustellenden Informationen übermittelt wird. Von dem Touchscreen 16 erhält die Steuerung 20 ein Signal P, das angibt, wo ein Benutzer des Touchscreens 16 den Touchscreen 16 berührt und/oder - sofern vorgesehen - ob der Benutzer derart auf eine als Eingabeposition gekennzeichnete Position auf den Touchscreen 16 drückt, dass dies als Eingabe zu verstehen ist. So kann vorgesehen sein, dass eine Eingabe durch einfaches Berühren des Touchscreens 16 erfolgt. Es kann aber auch vorgesehen sein, dass eine Eingabe nicht schon durch einfaches Berühren des Touchscreens 16 sondern durch (leichtes) Drücken auf den Touchscreen 16 erfolgt. Letzteres ist ein für den Einsatz in Kraftfahrzeugen besonders geeignetes Vorgehen.

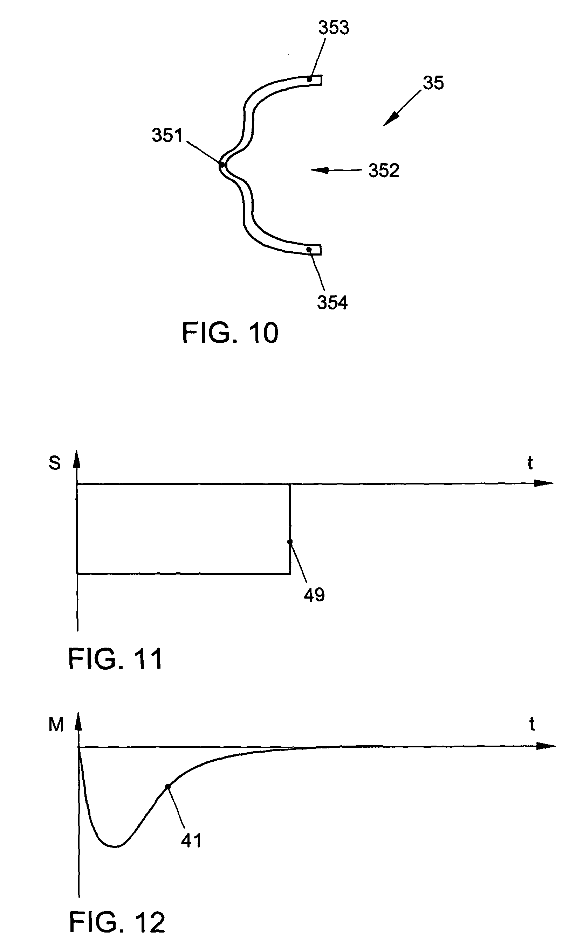

Als Bestätigung der Eingabe eines Befehls erzeugt die Steuerung ein mindestens 50ms andauerndes Steuersignal S, mittels dessen der Aktor 18 kurzzeitig bewegt wird. Die einzelnen Komponenten der Eingabevorrichtung sind dabei derart dimensioniert, dass der Touchscreen 16 weniger als 1 mm ausgelenkt wird. Ein Steuersignal S kann z.B. eine einfache - in Fig. 11 über die Zeit t dargestellte - Sprungfunktion 49 oder ein Steuersignal zur Erzeugung einer komplexeren Bewegung sein. Fig. 12 zeigt ein Ausführungsbeispiel einer Bewegung 41 des Touchscreens 16 als Bestätigung einer Eingabe mittels des Touchscreens 16 über die Zeit t dargestellt. M bezeichnet dabei die Auslenkung des Touchscreens 16 in eine zum Touchscreen 16 parallele Richtung, wobei M kleiner ist als 1 mm. Die Auslenkung des Touchscreens 16 erfolgt dabei für eine Dauer zwischen 50ms und 800ms, insbesondere für eine Dauer zwischen 100ms und 400ms. Es hat sich gezeigt, dass einige Probanden eine durch eine Sprungfunktion angeregte Bewegung des Touchscreens 16 vorziehen.

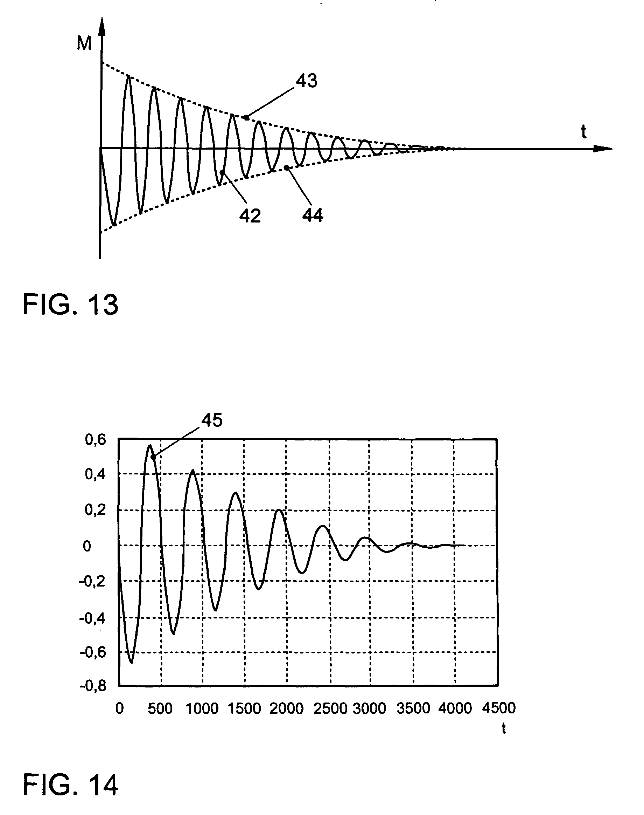

In einer von anderen Probanden bevorzugten Ausgestaltung ist der Touchscreen 16 zur Bestätigung des mittels des Touchscreens 16 eingegebenen Befehls -wie in Fig. 13 als Auslenkung M des Touchscreens 16 über die Zeit t dargestellt - mit einer abklingenden Schwingung 42 in eine zum Touchscreen 16 parallele Richtung bewegbar. Die abklingende Schwingung 42 weist eine Hüllkurve 43 bzw. 44 mit einem exponentiellen Anteil auf. Dabei weist die Hüllkurve 43 bzw. 44 z.B. einen Term t^{a} oder einen Term b^{t} auf, wobei a und b Variablen sind. So kann die Hüllkurve 43 bzw. 44 eine Funktion von a1 + a2· t^{a3} oder b1 + b2^{t} sein, wobei a1, a2, a3, b1 und b2 Variablen sind. Zudem besitzt die abklingende Schwingung 42 eine Frequenz zwischen 5Hz und 80Hz. Fig. 14 zeigt ein weiteres Steuersignal 45 zur Bewegung des Touchscreens 16 in eine zum Touchscreen 16 im wesentlichen parallele Richtung über die Zeit t in Abtastpunkten, wobei ein Abtastintervall 51,2 µs beträgt. Das Steuersignal 45 ist auf seinen Höchstwert normiert dargestellt. Es besitzt eine Frequenz von 38,1 Hz und ist nach 210ms abgeklungen, wobei das Abklingen gemäß einem quadratischen Zusammenhang erfolgt.

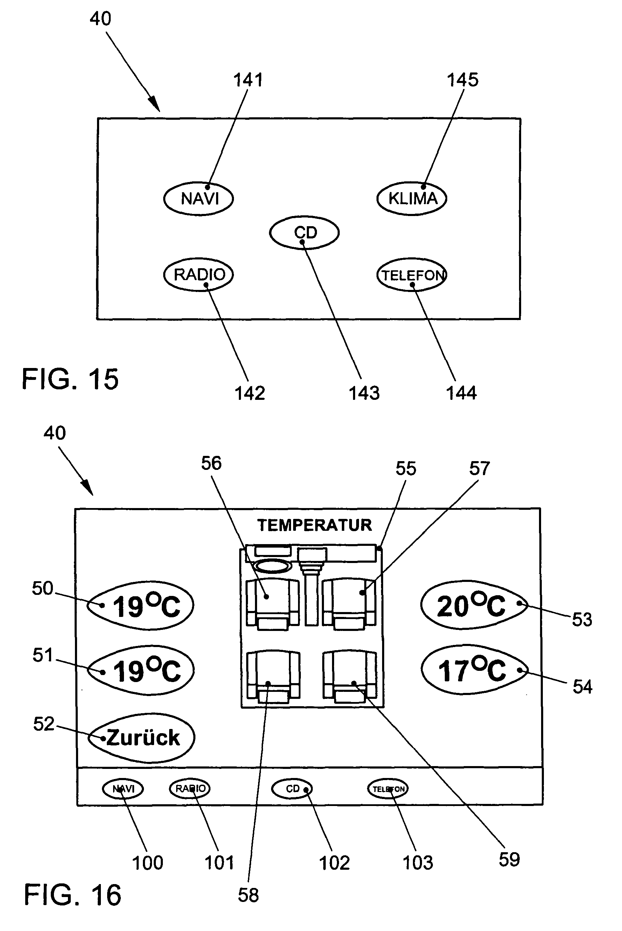

Die entsprechend der Eingabevorrichtung 10 ausgestalteten Eingabevorrichtungen 4 und 8 können in vorteilhafter Ausgestaltung z.B. eine in der WO 00/21795 (incorporated by reference) offenbarte Anzeige- und Bedienungseinrichtung unter Beibehaltung deren menügeführter Funktionalität ersetzen. Fig. 15, Fig. 16, Fig. 17, Fig. 18, Fig. 19 und Fig. 20 zeigen verschiedene Masken, die mittels einer Eingabevorrichtung 40 darstellbar sind. Die Eingabevorrichtung 40 ist dabei entsprechend der Eingabevorrichtung 10 ausgestaltet.

In Fig. 15 ist die Eingabevorrichtung 40 mit einer Grund-Maske dargestellt. Dabei stellt die Eingabevorrichtung 40 fünf durch Ellipsen ausgeführte Bedienelemente 141, 142, 143, 144 und 145 dar. Durch Berühren bzw. Drücken des Bedienelementes 142 in Fig. 15 wird eine Maske zur Bedienung eines Radios aufgerufen, und durch Berühren bzw. Drücken des Bedienelementes 143 in Fig. 15 wird eine Maske zur Bedienung eines CD-Spielers aufgerufen.

Durch Berühren bzw. Drücken des Bedienelementes 145 in Fig. 15 wird eine in Fig. 16 dargestellte Maske zur Bedienung einer Klimaanlage aufgerufen. In der in Fig. 16 dargestellten Maske sind Temperaturangaben der einzelnen Orte im Fahrzeuginnenraum zusammen mit Bedienelementen 50, 51, 52, 53 und 54 dargestellt, wobei die Temperaturangaben sich auf aktuell eingestellte Temperaturen beziehen, die über die Bedienelemente 50, 51, 53 und 54 verändert werden können.

Die Darstellung gemäß Fig. 16 mit der Überschrift ,TEMPERATUR' und der Anzeige eines Innenraumes 55 eines Kraftfahrzeuges macht deutlich, dass die Temperatur im Fahrzeuginneren individuell und sitzplatzbezogen einstellbar ist. Das Bedienelement 50 zeigt für den vorderen Fahrzeugführersitz 56 an, dass eine Temperatur von 19°C eingestellt ist. Das Bedienelement 53 zeigt für den vorderen Beifahrersitz 57 an, dass eine Temperatur von 20°C eingestellt ist. Für die Fondsitze 58 und 59 sind auf der linken Seite 19°C und auf der rechten Seite 17 °C eingestellt. Das Bedienelement 52 hat eine Zuweisung, d. h. eine Funktionszuweisung, die im Displayfeld mit "Zurück" (auf die nächst höhere Menüdarstellung, also im vorliegenden Fall auf die Maske gemäß Fig. 15) dargestellt ist.

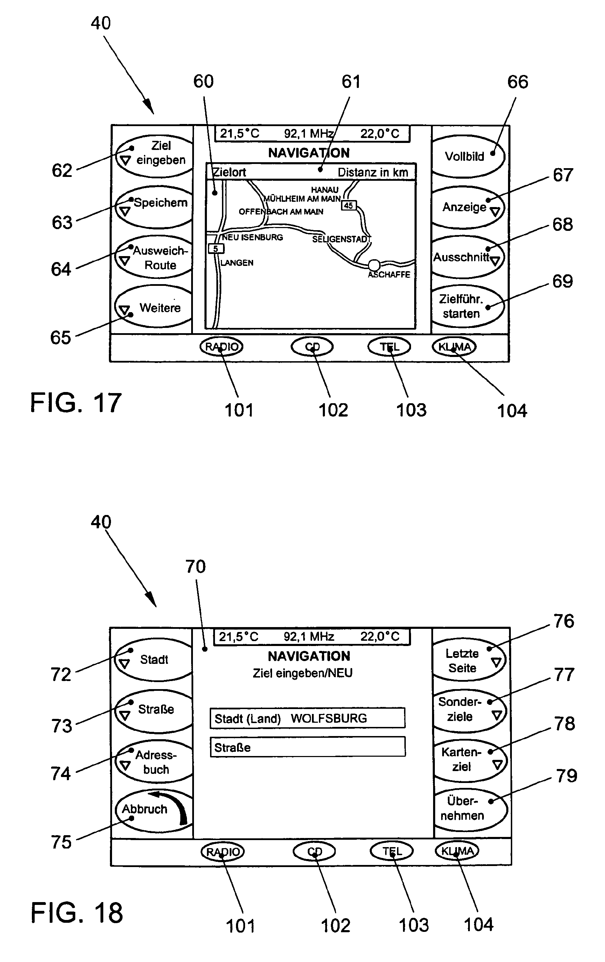

Durch Berühren bzw. Drücken des Bedienelementes 141 in Fig. 15 wird eine in Fig. 17 dargestellte Maske zur Bedienung eines Navigationssystems aufgerufen. Die Maske zeigt einen Ausschnitt einer Straßenkarte 60 des momentanen Fahrzeugortes sowie oberhalb der Straßenkarte 60 in einem Feld 61 den Zielort und die Entfernung bis zum Zielort. Zudem werden Bedienelemente 62, 63, 64, 65, 67 und 68 dargestellt, mittels derer durch Berühren bzw. Drücken Untermasken aufgerufen werden können. Es werden außerdem ein Bedienelement 66 zur Darstellung eines Vollbildes und ein Bedienelement 69 zum Starten einer Zielführung dargestellt. In Bezug auf Einzelheiten des unterlegten Menüs sei auf die WO 00/21795 verwiesen, wobei die Bedienelemente 62, 63, 64, 65, 66, 67, 68 und 69 die in der WO 00/21795 offenbarten Bedienelemente 3a, 3b, 3c, 3d, 3e, 3f, 3g und 3h ersetzen.

Durch Berühren bzw. Drücken des Bedienelementes 62 in Fig. 17 wird eine Untermaske gemäß Fig. 18 aufgerufen, die in einem Feld 70 das Fahrtziel anzeigt. Mittels der Untermaske gemäß Fig. 18 werden zudem Bedienelemente 72, 73, 74, 75, 76, 77, 78 und 79 dargestellt. In Bezug auf Einzelheiten des unterlegten Menüs sei ebenfalls auf die WO 00/21795 verwiesen, wobei die auf dem Display dargestellten Bedienelemente 72, 73, 74, 75, 76, 77, 78 und 79 die in der WO 00/21795 offenbarten Bedienelemente 3a, 3b, 3c, 3d, 3e, 3f, 3g und 3h ersetzen.

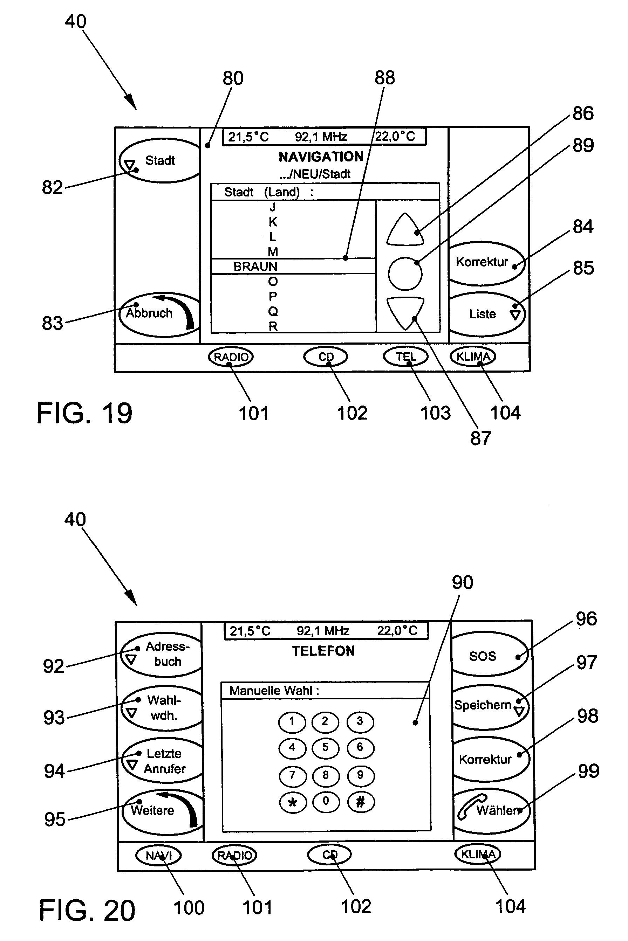

Durch Berühren bzw. Drücken des Bedienelementes 72 in Fig. 18 wird eine Untermaske gemäß Fig. 19 aufgerufen, die in einem Feld 80 einen einzugebenden Zielort anzeigt.

Mittels der Untermaske gemäß Fig. 19 werden zudem Bedienelemente 82, 83, 84 und 85 angezeigt, die die in der WO 00/21795 offenbarten Bedienelemente 3a, 3d, 3g und 3h ersetzen. In dem Feld 80 sind eine Buchstabenauswahlzeile 88 sowie Bedienelemente 86, 87 und 89 dargestellt. Die Buchstabenauswahlzeile 88 ist durch Berühren bzw. Drücken der Bedienelemente 86 bzw. 87 nach oben bzw. nach unten bewegbar. Durch Berühren bzw. Drücken des Bedienelementes 89 kann ein markierter Buchstabe ausgewählt werden.

Durch Berühren bzw. Drücken des Bedienelementes 144 in Fig. 15 wird eine in Fig. 20 dargestellte Maske zur Bedienung eines Telefons aufgerufen, die in einem Feld 90 Wahltasten für ein Telefon anzeigt. Mittels der Untermaske gemäß Fig. 20 werden zudem Bedienelemente 92, 93, 94, 95, 96, 97, 98 und 99 angezeigt, die die in der WO 00/21795 offenbarten Bedienelemente 3a, 3b, 3c, 3d, 3e, 3f, 3g und 3h ersetzen. Die im Feld 90 dargestellten Wahltasten für ein Telefon sind als Bedienelemente ausgestaltet, mittels derer eine Telefonnummer wählbar ist.

In den Masken und Untermasken gemäß Fig. 15, Fig. 16, Fig. 17, Fig. 18, Fig. 19 bzw. Fig. 20 sind zudem Bedienelemente 100, 101, 102, 103 und 104 dargestellt, die den Bedienelementen 141, 142, 143, 144 und 145 entsprechen.

Mittels der Bedienelemente 50, 51, 52, 53, 54, 62, 63, 64, 65, 66, 67, 68, 69, 72, 73, 74, 75, 76, 77, 78, 79, 82, 83, 84, 85, 86, 87, 89, 92, 93, 94, 95, 96, 97, 98, 99, 100, 101, 102, 103, 104, 141, 142, 143, 144 und 145, wird eine haptische Rückkopplung erzeugt. Dazu wird der Touchscreen der Anzeige 40 in einer mit Bezugnahme auf Fig. 3, Fig. 4 Fig. 11, Fig. 12 Fig. 13 bzw. Fig. 14 beschriebenen Weise dann bewegt, wenn durch Berühren bzw. Drücken des entsprechenden Bedienelementes 50, 51, 52, 53, 54, 62, 63, 64, 65, 66, 67, 68, 69, 72, 73, 74, 75, 76, 77, 78, 79, 82, 83, 84, 85, 86, 87, 89, 92, 93, 94, 95, 96, 97, 98, 99, 100, 101, 102, 103, 104, 141, 142, 143, 144 bzw. 145 eine Benutzereingabe erfolgt ist, d.h. wenn die Berührung z.B. lang genug erfolgt ist und/oder genügend Druck auf den Touchscreen ausgeübt worden ist. Dies ist für den Einsatz in einem Kraftfahrzeug besonders vorteilhaft, da ein Bediener, also z.B. der Fahrer eines Kraftfahrzeuges, auf diese Weise eine Bestätigung seiner Eingabe erhält, ohne auf die Anzeige schauen zu müssen. Auf diese Weise wird die Sicherheit während einer Fahrt erhöht.

Die erfindungsgemäße Vorrichtung ist auch auf eine multifunktionale Bedieneinrichtung gemäß der DE 101 39 693 A1 (incorporated by reference) übertragbar, wobei z.B. das in der DE 101 39 693 A1 offenbarte Drehelement durch Bedienelemente ersetzt werden kann, die entsprechend den Bedienelementen 86 und 87 ausgestaltet sind.

### BEZUGSZEICHENLISTE

- 1, 5: Cockpit
- 2, 6: Lenkrad
- 3, 7: Armaturenbrett
- 4, 8, 10, 40: Eingabevorrichtung
- 11,12, 13, 14, 30, 31, 32, 33, 34, 35: Feder
- 15: Rahmen
- 15A, 15B, 15C,15D: Verbindungselement
- 16: Touchscreen
- 16A: Bedienfläche
- 17: Display
- 18: Aktor
- 18A: Antriebswellenzapfen
- 19: Verbindungsstück
- 19A: Verkrümmung
- 20: Steuerung
- 21: Referenzkörper
- 25, 27, 303, 304, 313, 314, 323, 324, 333, 334, 343, 344, 353, 354: Federarm
- 26,301,311,321, 331, 341, 351: Verbindungspunkt
- 28,302,312,322, 332, 342, 352: Öffnung
- 29A, 29B, 29C, 29D: Halterung
- 41: Bewegung
- 42: Schwingung
- 43, 44: Hüllkurve
- 45: Steuersignal
- 49: Sprungfunktion
- 50,51,52,53,54 62, 63, 64, 65, 66, 67, 68, 69, 72, 73, 74, 75, 76, 77, 78, 79, 82, 83, 84, 85, 86, 87, 89, 92, 93, 94, 95, 96, 97, 98, 99, 100, 101, 102, 103,104,141, 142, 143, 144, 145,: Bedienelemente
- 55: Innenraum
- 56: Fahrzeugführersitz
- 57: Beifahrersitz
- 58,59: Fondsitz
- 60: Straßenkarte
- 61, 70, 80, 90: Feld
- 88: Buchstabenauswahlzeile
- A, P: Signal
- a, a1, a2, a3, b, b1, b2: Variable
- D: Dicke
- HR: Hauptrichtung
- NR: Nebenrichtung
- M: Auslenkung
- S: Steuersignal
- t: Zeit

## Patentansprüche

1. Eingabevorrichtung (4,8,10,40), die einen Touchscreen (16) zur Eingabe von Befehlen durch Berühren einer Bedienfläche (16A) oder durch Drücken auf die Bedienfläche (16A), einen Aktor (18) zum Bewegen des Touchscreens (16) in zumindest eine Richtung gegenüber einem Referenzkörper (21) aufweist,
**dadurch gekennzeichnet, dass**
die Eingabevorrichtung (4,8,10,40) mindestens eine Feder (34,35), vorzugsweise mindestens drei Federn (34,35), insbesondere mindestens vier Federn (34,35) zum mechanischen Verbinden des Touchscreens (16) mit dem Referenzkörper (21) aufweist.

2. Eingabevorrichtung (4,8,10,40) nach Anspruch 1,
**dadurch gekennzeichnet, dass**
die Feder (34,35) zum mechanischen Verbinden des Touchscreens (16) mit dem Referenzkörper (21) im wesentlichen eine U-Form aufweist.

3. Eingabevorrichtung (4,8,10,40) nach einem oder mehreren der vorhergehenden Ansprüche,
**dadurch gekennzeichnet, dass**
der Referenzkörper (21) ein Display (17) zur Darstellung von Informationen oder ein Teil eines Kraftfahrzeuges ist.

4. Eingabevorrichtung (4,8,10,40) nach einem oder mehreren der vorhergehenden Ansprüche,
**dadurch gekennzeichnet, dass**
die Feder (34,35) eine Öffnung (332,342,352) aufweist, die im wesentlichen auf den Touchscreen (16) gerichtet ist.

5. Eingabevorrichtung (4,8,10,40) nach Anspruch 4,
**dadurch gekennzeichnet, dass**
die Öffnung (332,342,352) zwischen 5mm und 30mm breit ist.

6. Eingabevorrichtung (4,8,10,40) nach einem oder mehreren der vorhergehenden Ansprüche,
**dadurch gekennzeichnet, dass**
die Feder (34,35) eine Öffnung (332,342,352) und einen der Öffnung (332,342,352) im wesentlichen gegenüberliegenden Scheitelpunkt aufweist, wobei die Feder (34,35) derart ausgerichtet ist, dass eine imaginäre durch den Scheitelpunkt und durch die Öffnung (332,342,352) verlaufende Linie im wesentlichen parallel zur Bedienfläche (16A) verläuft.

7. Eingabevorrichtung (4,8,10,40) nach einem oder mehreren der vorhergehenden Ansprüche,
**dadurch gekennzeichnet, dass**
der Touchscreen (16) mittels des Aktors (18) im wesentlichen parallel zur Bedienfläche (16A) bewegbar ist.

8. Eingabevorrichtung (4,8,10,40) nach einem oder mehreren der vorhergehenden Ansprüche,
**dadurch gekennzeichnet, dass**
mittels des Aktors (18) eine zumindest im wesentlichen rotatorische Bewegung erzeugbar ist.

9. Eingabevorrichtung (4,8,10,40) nach Anspruch 8,
**dadurch gekennzeichnet, dass**
die Achse der rotatorischen Bewegung im wesentlichen senkrecht zur Bedienfläche (16A) ist.

10. Eingabevorrichtung (4,8,10,40) nach einem oder mehreren der vorhergehenden Ansprüche,
**dadurch gekennzeichnet, dass**
die Feder (34,35) eine Dicke von 0,5mm bis 2mm aufweist.

11. Eingabevorrichtung (4,8,10,40) nach einem oder mehreren der vorhergehenden Ansprüche,
**dadurch gekennzeichnet, dass**
die Feder (34,35) im wesentlichen aus Kunststoff besteht.

12. Eingabevorrichtung (4,8,10,40) nach einem oder mehreren der vorhergehenden Ansprüche,
**dadurch gekennzeichnet, dass**
die Feder (34,35) eine Federkonstante aufweist, die derart auf eine Masse des Touchscreens (16) abgestimmt ist, dass der Touchscreen (16) in Verbindung mit der Feder (34,35) eine mechanische Eigenfrequenz von 5Hz bis 150Hz, insbesondere von 30Hz bis 75Hz aufweist.

13. Eingabevorrichtung (4,8,10,40) nach einem oder mehreren der vorhergehenden Ansprüche,
**dadurch gekennzeichnet, dass**
die Feder (34,35) zwei Federarme (354), eine zwischen den beiden Federarmen (354) angeordnete Öffnung (332,342,352) und einen Verbindungspunkt (331,341,351) aufweist, an dem die beiden Federarme (354) verbunden sind,
wobei die Feder (34,35) parallel zur Öffnung (332,342,352) eine Hauptfederkonstante und eine Nebenfederkonstante in einer durch den Verbindungspunkt (331,341,351) und durch die Öffnung (332,342,352) verlaufende Richtung aufweist, und
wobei die Nebenfederkonstante zumindest das Zweifache der Hauptfederkonstante, vorzugsweise zumindest das Dreifache der Hauptfederkonstante, insbesondere zumindest das Vierfache der Hauptfederkonstante beträgt.

14. Eingabevorrichtung (4,8,10,40) nach einem oder mehreren der vorhergehenden Ansprüche,
**dadurch gekennzeichnet, dass**
die Feder (34,35) zwei Federarme (354), eine zwischen den beiden Federarmen (354) angeordnete Öffnung (332,342,352) und einen Verbindungspunkt (331,341,351) aufweist, an dem die beiden Federarme (354) verbunden sind,
wobei die Feder (34,35) parallel zur Öffnung (332,342,352) und Bedienfläche (16A) eine Hauptfederkonstante aufweist,
wobei die Feder (34,35) senkrecht zur Öffnung (332,342,352) jedoch parallel zur Bedienfläche (16A) eine Nebenfederkonstante aufweist und
wobei die Nebenfederkonstante zumindest das Zweifache der Hauptfederkonstante, vorzugsweise zumindest das Dreifache der Hauptfederkonstante, insbesondere zumindest das Vierfache der Hauptfederkonstante beträgt.

15. Eingabevorrichtung (4,8,10,40) nach einem oder mehreren der vorhergehenden Ansprüche,
**dadurch gekennzeichnet, dass**
die Eingabevorrichtung (4,8,10,40) zumindest zwei Federn (34,35) und zumindest ein mechanisches Verbindungselement (15A,15B,15C,15D) zum Verbinden der zumindest zwei Federn (34,35) aufweist, wobei das mechanische Verbindungselement (15A,15B,15C,15D) und die zumindest zwei Federn (34,35) zusammen aus einem Stück sind.

16. Eingabevorrichtung (4,8,10,40) nach einem oder mehreren der vorhergehenden Ansprüche,
**dadurch gekennzeichnet, dass**
die Eingabevorrichtung (4,8,10,40) zumindest zwei Federn (34,35) und zumindest ein mechanisches Verbindungselement (15A,15B,15C,15D) zum Verbinden der zumindest zwei Federn (34,35) aufweist, wobei das mechanische Verbindungselement (15A,15B,15C,15D) und die zumindest zwei Federn (34,35) zusammen aus einem Stück gegossen sind.

17. Eingabevorrichtung (4,8,10,40) nach einem oder mehreren der vorhergehenden Ansprüche,
**dadurch gekennzeichnet, dass**
der Touchscreen (16) durch die Feder (34,35) gegenüber dem Referenzkörper (21) frei schwebend gehalten wird.

18. Eingabevorrichtung (4,8,10,40) nach Anspruch 17,
**dadurch gekennzeichnet, dass**
der Touchscreen (16) gegenüber dem Referenzkörper (21) nicht durch ein Kugellager oder ein kugellagerartiges Element oder eine Gleitfläche gehalten wird.

19. Eingabevorrichtung (4,8,10,40) nach einem oder mehreren der vorhergehenden Ansprüche,
**dadurch gekennzeichnet, dass**
die Eingabevorrichtung (4,8,10,40) eine Steuerung (20) zum Ansteuern des Aktors (18) aufweist, wobei der Aktor (18) mittels der Steuerung (20) derart ansteuerbar ist, dass der Touchscreen (16) mittels des Aktors (18) zur Bestätigung eines mittels des Touchscreens (16) eingegebenen Befehls in eine zur Bedienfläche (16A) im wesentlichen parallele Richtung bewegbar ist.

20. Eingabevorrichtung (4,8,10,40) nach Anspruch 19,
**dadurch gekennzeichnet, dass**
der Touchscreen (16) zur Bestätigung des mittels des Touchscreens (16) eingegebenen Befehls für eine Dauer zwischen 50ms und 800ms, vorzugsweise für eine Dauer zwischen 100ms und 400ms in die zur Bedienfläche (16A) im wesentlichen parallele Richtung bewegbar ist.

21. Eingabevorrichtung (4,8,10,40) nach Anspruch 20,
**dadurch gekennzeichnet, dass**
der Touchscreen (16) zur Bestätigung des mittels des Touchscreens (16) eingegebenen Befehls periodisch in die zur Bedienfläche (16A) im wesentlichen parallele Richtung bewegbar ist.

22. Eingabevorrichtung (4,8,10,40) nach Anspruch 20,
**dadurch gekennzeichnet, dass**
der Touchscreen (16) zur Bestätigung des mittels des Touchscreens (16) eingegebenen Befehls mit einer abklingenden Schwingung (42) in die zur Bedienfläche (16A) im wesentlichen parallele Richtung bewegbar ist.

23. Eingabevorrichtung (4,8,10,40) nach Anspruch 22,
**dadurch gekennzeichnet, dass**
die abklingende Schwingung (42) eine Hüllkurve (43,44) mit einem exponentiellen Anteil aufweist.
